# EUROPÄISCHE PATENTANMELDUNG

(11) **EP 1 235 006 A1**
(43) Veröffentlichungstag der Anmeldung: **28.08.2002**
(21) Anmeldenummer: 01104683.6
(22) Anmeldetag: 24.02.2001
(51) Int. Cl.: F16H 61/18

(54) **Schaltvorrichtung für Wechselgetriebe von Kraftfahrzeugen mit einer Rückwärtsgangsperre**

(71) Anmelder: Ford Global Technologies, Inc., A subsidiary of Ford Motor Company, Dearborn, Michigan 48126 (US)
(72) Erfinder: Schmidt, Vinzenz, 50259 Pulheim (DE); Yang, Jie, 50769 Köln (DE)
(74) Vertreter: Drömer, Hans-Carsten, Dipl.-Ing.

(57) **Zusammenfassung**

Die Erfindung betrifft eine Schaltvorrichtung für das Wechselgetriebe eines Kraftfahrzeuges mit einer Führungskulisse (5), die einen Schalthebel (4) in einer Neutralgasse (N) und in verschiedenen Schaltgassen ("1/2", "3/4", "5/RW") führt. Als Rückwärtsgangsperre zur Verhinderung des direkten Überganges vom fünften Vorwärtsgang ("5") zum Rückwärtsgang ("RW") ist eine Biegefeder (1) vorgesehen, welche an mindestens einem Ende an der Führungskulisse (5) fixiert ist und mit einem geknickten Verlauf (7, 8, 9) in den Schaltweg des Schalthebels (4) hineinragt. Bei einer Bewegung des Schalthebels (4) aus der Position des fünften Ganges heraus lenkt die Biegefeder (1) den Schalthebel zur Neutralgasse (N) um. Der Rückwärtsgang ("RW") kann nur aus der Neutralgasse (N) kommend eingelegt werden, wobei hierzu die Biegefeder (1) aufgrund ihrer Elastizität beiseite gebogen werden muss.

## Beschreibung

Die Erfindung betrifft eine Schaltvorrichtung für Wechselgetriebe von Kraftfahrzeugen, enthaltend einen beweglich angeordneten Schalthebel, eine Führungskulisse mit einer Neutralgasse und davon abzweigenden Schaltgassen zur Führung des Schalthebels bei der Vorwahl der Schaltgasse und beim Einrücken der Gänge, sowie ein gegen eine Federkraft bewegliches Sperrelement, das als Rückwärtsgangsperre in den Weg des Schalthebels hineinragt und dessen direkte Bewegung von einem Vorwärtsgang in den in derselben Schaltgasse angeordneten Rückwärtsgang verhindert.

Durch eine Schaltvorrichtung lassen sich in einem Wechselgetriebe verschiedene Zahnradkombinationen in Eingriff bringen, um unterschiedliche Unter- beziehungsweise Übersetzungsverhältnisse zwischen der Antriebswelle und der Abtriebswelle zu realisieren. In der Regel sind fünf Vorwärtsgänge und ein Rückwärtsgang einlegbar. Das Einlegen der Gänge geschieht mit Hilfe eines Schalthebels, der an eine dem gewünschten Gang entsprechende Position zu bewegen ist, wobei die Bewegung des Schalthebels über einen entsprechenden Mechanismus das Ineinandergreifen der zugehörigen Zahnräder bewirkt. Die Bewegung des Schalthebels wird üblicherweise durch eine Führungskulisse so begrenzt, dass dieser entlang einer Neutralgasse beweglich ist, in welcher kein Gang eingelegt ist, wobei die Neutralgasse von rechtwinklig hierzu stehenden Schaltgassen gekreuzt wird, an deren oberen und unteren Ende sich jeweils eine Position für einen eingelegten Gang befindet. Häufig befinden sich in der ersten Schaltgasse der erste Gang und zweite Gang, in der zweiten Schaltgasse der dritte Gang und vierte Gang und in der dritten Schaltgasse der fünfte Gang und der Rückwärtsgang.

Um bei einer derartigen Schaltvorrichtung einen unbeabsichtigten und für das Getriebe schädlichen direkten Übergang von einem Vorwärtsgang zu dem in derselben Schaltgasse wie der Vorwärtsgang befindlichen Rückwärtsgang zu verhindern, sind unter der Bezeichnung "Rückwärtsgangsperre" verschiedene Mechanismen bekannt. Insbesondere ist aus der US 4 633 728 eine Schaltvorrichtung der vorstehend erläuterten Art bekannt, bei der eine an der Führungskulisse beweglich befestigte Sperrklinke in den Weg des Schalthebels hineinragt und durch ihre Formgebung den direkten Übergang vom fünften Gang zum Rückwärtsgang in derselben Schaltgasse verhindert. Der Rückwärtsgang kann nur aus der Neutralposition des Schalthebels heraus eingelegt werden, wobei der Schalthebel in diesem Falle die Sperrklinke gegen eine Federkraft beiseite schieben muss. Durch die gegen die Feder zusätzlich aufzubringende Kraft erhält der Fahrer eine sensorische Rückkopplung, die ihm das Einlegen des Rückwärtsganges bewusst macht. Das aus der US 4,633,728 bekannte Sperrelement muss dabei sowohl linear verschiebebeweglich als auch drehbar gegen die Kraft einer Rückstellfeder gelagert sein, was verhältnismäßig aufwendig ist.

Ein ähnlicher Schaltmechanismus mit einer Rückwärtsgangsperre ist auch aus der EP 0 234 267 B1 bekannt. Die Führungskulisse, die die möglichen Bewegungen des Schaltvorganges begrenzt, führt dabei nicht den manuell betätigten Schalthebel, sondern den Schaltfinger einer Schaltwelle, welche über Schaltgabeln unmittelbar auf die zum Eingriff zu bringenden Zahnräder einwirkt. Der Übergang vom fünften Gang zum Rückwärtsgang in derselben Schaltgasse wird bei dieser Vorrichtung durch einen beweglich gelagerten und federbelasteten Sperrnocken verhindert.

Des weiteren ist aus der EP 0 955 488 A1 eine Schaltvorrichtung für ein Wechselgetriebe bekannt, bei welcher ein feststehender Vorsprung den direkten Weg des Schalthebels in die Position des Rückwärtsganges blockiert. Zum Einlegen des Rückwärtsganges muss der Sperranschlag unter Ausnutzung der Elastizität des Schaltmechanismus umgangen werden.

Vor diesem Hintergrund war es Aufgabe der vorliegenden Erfindung, eine Schaltvorrichtung mit einem vereinfachten Mechanismus für eine Rückwärtsgangsperre bereitzustellen.

Diese Aufgabe wird durch eine Schaltvorrichtung mit den in Anspruch 1 angegebenen Merkmalen gelöst. Vorteilhafte Ausgestaltungen sind in den Unteransprüchen enthalten.

Die Schaltvorrichtung für das Wechselgetriebe eines Kraftfahrzeuges enthält demnach einen beweglich angeordneten Schalthebel und eine Führungskulisse, wobei in der Führungskulisse eine Neutralgasse ausgebildet ist zur Führung des Schalthebels bei der Vorwahl einer Schaltgasse, und wobei von der Neutralgasse abzweigende Schaltgassen ausgebildet sind zur Führung des Schalthebels beim Einrücken der Gänge. Im Rahmen der vorliegenden Beschreibung soll unter Schalthebel sowohl der unmittelbar vom Fahrer manuell betätigte Schalthebel verstanden werden als auch jedes andere funktional gleichwertige Element wie zum Beispiel ein Schaltfinger einer Schaltwelle, welches in einer Führungskulisse die erlaubten Bahnen des Schaltvorganges abtastet. Die Schaltvorrichtung enthält ferner ein gegen eine Federkraft bewegliches Sperrelement, das als Rückwärtsgangsperre wirkt und in den Weg des Schalthebels hineinragt, so dass es dessen direkte Bewegung von einem Vorwärtsgang, der in derselben Schaltgasse wie der Rückwärtsgang angeordnet ist, in den Rückwärtsgang verhindert. Die Schaltvorrichtung ist dadurch gekennzeichnet, dass das Sperrelement durch eine Biegefeder gebildet wird.

Durch die Verwendung einer Biegefeder kann ein denkbar einfacher Aufbau einer Rückwärtsgangsperre erreicht werden. Es müssen keine mehrteiligen, beweglich gelagerten und mit einer Federkraft beaufschlagten Elemente wie zum Beispiel Klinken oder Sperrnocken vorgesehen werden. Die Sperr- und Führungsfunktion wird vielmehr durch die Biegefeder selbst vorgenommen, wobei diese aufgrund ihrer Elastizität die gewünschten Gegenkräfte ohne zusätzliche Hilfsmittel bereitstellt.

Die Biegefeder ist vorzugsweise an der Führungskulisse befestigt. Die Führungskulisse kann dadurch als eine Einheit zusammen mit der Biegefeder vormontiert werden.

Ferner ist die Biegefeder vorzugsweise an mindestens einem ihrer Enden gegen Verschiebungen fixiert, so dass sie sich um dieses Ende allenfalls drehen kann. Alternativ oder zusätzlich zur genannten Fixierung an einem Ende kann die Biegefeder auch an einem ihrer Enden gegen einen Anschlag abgestützt sein, so dass eine Bewegung über den Anschlag hinaus nicht möglich ist. Die Abstützung an einem Anschlag lässt sich in der Regel in der Montage leichter als eine vollständige Fixierung realisieren. Eine derartige Abstützung reicht im Betriebszustand üblicherweise aus, da die Biegefeder aufgrund ihrer Vorspannung und Elastizität ständig gegen den Anschlag gedrückt wird.

Gemäß einer bevorzugten Ausgestaltung der erfindungsgemäßen Schaltvorrichtung weist die Biegefeder einen geknickt verlaufenden Abschnitt beziehungsweise einen Knick auf, der in die gemeinsame Schaltgasse von Rückwärtsgang und dem in dieser Schaltgasse liegenden Vorwärtsgang ragt. Der Scheitelpunkt des Knickes liegt dabei etwa im Bereich der Neutralgasse, und der dem genannten Vorwärtsgang näher liegende Schenkel des Knickes verläuft ausgehend vom Scheitelpunkt in einem spitzen Winkel zur gemeinsamen Schaltgasse von Rückwärtsgang und Vorwärtsgang in die Richtung des Vorwärtsganges und in einem stumpfen Winkel zur Neutralgasse. Die Knickstelle ist vorzugsweise nicht scharfkantig, sondern abgerundet ausgebildet. Durch den Knick wird eine Gabelung des Weges des aus der Neutralgasse kommenden Schalthebels erreicht, wobei der Weg von einem benachbarten Vorwärtsgang in den Vorwärtsgang, der in derselben Schaltgasse wie der Rückwärtsgang liegt, durch die Biegefeder nicht behindert wird. Bei einer Zurückbewegung des Schalthebels aus dem Vorwärtsgang, der in derselben Schaltgasse wie der Rückwärtsgang liegt, wird der Schalthebel, wenn er gegen die Biegefeder stößt, durch den zum Vorwärtsgang gerichteten Schenkel des Knickes zurück zur Neutralgasse gelenkt. Der Winkel, unter welchem der zum Vorwärtsgang gerichtete Schenkel der Biegefeder zur Schaltgasse steht, ist geeignet so zu wählen, dass bei einem Anlegen des Schalthebels an diesen Schenkel die Biegefeder nicht oder nur unwesentlich beiseite gedrückt wird, so dass der direkte Weg vom Vorwärtsgang in den Rückwärtsgang nicht freigegeben wird. Um die Biegefeder für das Einlegen des Rückwärtsgangs beiseite zu biegen, muss vielmehr der Schalthebel aus der Neutralgasse kommen und gegen den höchsten Punkt (Scheitelpunkt) des Knickes der Biegefeder beziehungsweise den daran angrenzenden und zum Rückwärtsgang gerichteten Schenkel des Knickes gedrückt werden. Nur wenn der Schalthebel aus dieser Richtung kommt, kann mit ihm eine hinreichend große Kraft auf die Biegefeder ausgeübt werden, so dass diese nachgibt und den Weg zum Rückwärtsgang freigibt.

Der Winkel, unter welchem der zum Vorwärtsgang gerichtete Schenkel des Knickes der Biegefeder relativ zur Schaltgasse von Rückwärtsgang und Vorwärtsgang liegt, beträgt typischerweise 40° bis 90°, vorzugsweise 50° bis 80°. Bei den genannten Werten wird mit ausreichender Sicherheit gewährleistet, dass bei einer Bewegung des Schalthebels aus der Position des Vorwärtsganges, der in derselben Schaltgasse liegt wie der Rückwärtsgang, in Richtung des Rückwärtsganges der Schalthebel nicht die Biegefeder auf Seite drückt, sondern dass er in Richtung der Neutralgasse abgelenkt wird.

Zwischen den beiden Schenkeln des Knickes der Biegefeder liegt ein Winkel von typischerweise 90° bis 120°, vorzugsweise von 95° bis 110°. Hierdurch wird erreicht, dass der zum Rückwärtsgang gerichtete Schenkel des Knickes relativ zur Schaltgasse zwischen Rückwärtsgang und Vorwärtsgang einen kleineren Winkel bildet als der zum Vorwärtsgang gerichtete Schenkel. Mit anderen Worten verläuft der zum Rückwärtsgang gerichtete Schenkel flacher oder stärker parallel zur Schaltgasse als der zum Vorwärtsgang gerichtete Schenkel.

Im Folgenden wird die Erfindung mit Hilfe der Figuren beispielhaft erläutert. Es zeigen:
- Fig. 1: eine Aufsicht auf eine Führungskulisse mit einer daran befestigten Biegefeder gemäß einer ersten Ausführungsform der Erfindung;
- Fig. 2a-f: die Bewegung des Schalthebels in verschiedene Positionen in der Schaltvorrichtung nach Figur 1;
- Fig. 3: eine Aufsicht auf eine Führungskulisse mit einer daran befestigten Biegefeder gemäß einer zweiten Ausführungsform der Erfindung;
- Fig. 4a-f: die Bewegung des Schalthebels in verschiedene Positionen in der Schaltvorrichtung nach Figur 3;
- Fig. 5: eine Aufsicht auf eine Führungskulisse mit einer daran befestigten Biegefeder gemäß einer dritten Ausführungsform der Erfindung;
- Fig. 6: eine perspektivische Ansicht der Schaltvorrichtung nach Figur 1 sowie separat die Biegefeder.

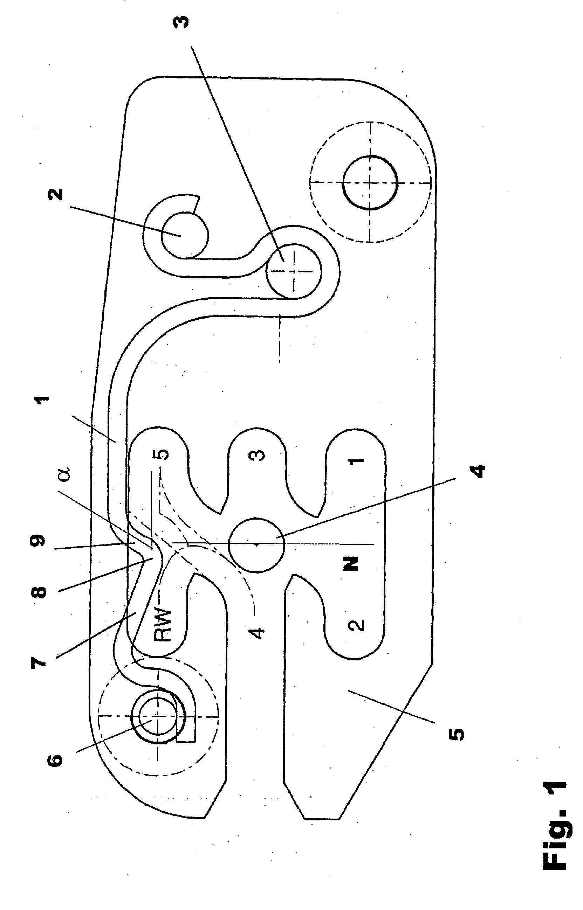

In Figur 1 ist in der Aufsicht eine Schaltkulisse 5 für die Schaltvorrichtung eines Wechselgetriebes mit einer daran angeordneten Biegefeder 1 gemäß einer ersten Ausführungsform der vorliegenden Erfindung dargestellt. Die Führungskulisse 5 weist in bekannter Weise Aussparungen auf, die eine (in Figur 1 vertikale) Neutralgasse N sowie drei die Neutralgasse N rechtwinklig schneidende Schaltgassen "1/2", "3/4" und "5/RW" bilden. Ein im Querschnitt erkennbarer Schalthebel 4 lässt sich entlang der Neutralgasse N bewegen, um eine Schaltgasse vorzuwählen. Befindet sich der Schalthebel vor einer gewählten Schaltgasse wie zum Beispiel der Schaltgasse "3/4" (Figur 1), so kann durch Bewegen des Schalthebels 4 entlang dieser Schaltgasse der gewünschte Gang eingelegt werden. Zum Beispiel kann aus der in Figur 1 dargestellten Position heraus durch eine Bewegung des Schalthebels 4 nach links der vierte Gang "4" oder durch eine Bewegung nach rechts der dritte Gang "3" eingelegt werden.

Die in den Figuren dargestellte Vorrichtung kann in der dargestellten Weise oder in geeignet abgewandelter Weise an verschiedenen Stellen einer Schaltvorrichtung für ein Wechselgetriebe angeordnet sein, wobei der Schalthebel 4 der manuell betätigte Schalthebel im engeren Sinne sein kann oder auch ein Schaltfinger an einer Schaltwelle, welche unmittelbar dem Einlegen der Gänge dient.

Zur Vermeidung von Getriebeschäden und unbeabsichtigten gefährlichen Fahrsituationen ist es bekannt, an einer Führungskulisse eine Rückwärtsgangsperre vorzusehen, welche das unmittelbare Bewegen des Schalthebels 4 vom (fünften) Vorwärtsgang in den am anderen Ende derselben Schaltgasse angeordneten Rückwärtsgang "RW" verhindert oder zumindest erschwert. Eine solche Rückwärtsgangsperre wird bei der in Figur 1 dargestellten Schaltvorrichtung durch die Biegefeder 1 realisiert, welche an ihrem in Figur 1 rechten Ende über die beiden Zapfen 2 und 3, die von der Führungskulisse 5 senkrecht abstehen, an der Führungskulisse befestigt ist. Die elastische Blattfeder aus einem geeigneten Metall verläuft von diesem befestigten Ende aus über die Führungskulisse 5 und ragt mit einem geknickt verlaufenden Abschnitt 7, 8, 9 in die Schaltgasse "5/RW" hinein. Hinter dem geknickten Abschnitt ist das andere Ende der Biegefeder 1 an einer Schraube 6 abgestützt, die ebenfalls an der Führungskulisse 5 befestigt ist. Die Abstützung verhindert dabei die Bewegung des Federendes in Richtung der bei Schaltvorgängen auf die Feder wirkenden Kräfte (in Figur 1 nach oben).

Der in den Weg des Schalthebels 4 ragende Knick der Biegefeder 1 besteht aus einem geraden, zum Rückwärtsgang "RW" gewandten Schenkel 7, einem Scheitelpunkt 8, der den höchsten Punkt des Knickes darstellt, und einem daran anschließenden zweiten Schenkel 9, welcher dem fünften Vorwärtsgang "5" zugewandt ist. Der Knick ist nicht scharfkantig, sondern abgerundet ausgebildet, um eine glatte Führung für den Schalthebel 4 zu bilden.

Der dem fünften Vorwärtsgang zugewandte Schenkel 9 des Knickes steht unter einem Winkel α zur Schaltgasse "5/RW". Dieser Winkel α beträgt typischerweise ca. 50°. Er ist verhältnismäßig steil gewählt, damit der aus der Position des fünften Ganges heraus bewegte Schalthebel 4 beim Anstoßen an den Schenkel 9 in Richtung der Neutralgasse N abgelenkt wird, und damit dabei die auf die Biegefeder 1 ausgeübte Kraftkomponente, welche die Biegefeder beiseite drücken würde, möglichst klein ist. Da zwischen Neutralgasse N und Schaltgasse "5/RW" ein rechter Winkel besteht, ist der Winkel zwischen dem Schenkel 9 und der Neutralgasse N stumpf (α + 90°).

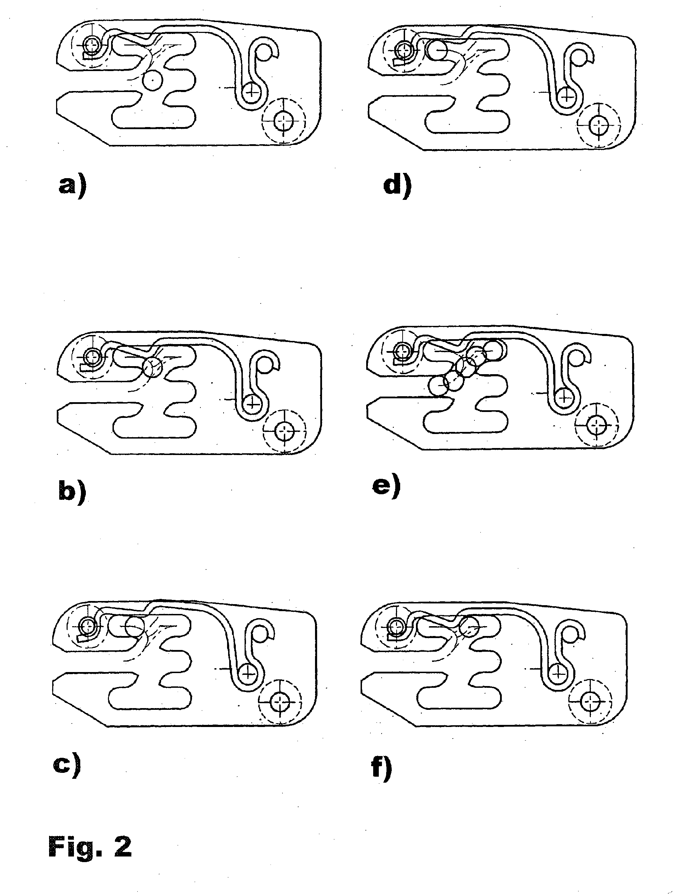

Das Verhalten der Biegefeder 1 bei der Bewegung des Schalthebels 4 ist in Figur 2 in verschiedenen Stadien dargestellt. Um die Darstellung übersichtlich zu halten, sind die aus Figur 1 entnehmbaren Bezeichnungen der Teile der Schaltvorrichtung in Figur 2 nicht erneut aufgeführt.

Figur 2a entspricht der Situation von Figur 1, wo der Schalthebel 4 in der Neutralposition steht, das heißt im Schnittpunkt der Neutralgasse N und der Schaltgasse "3/4".

Figur 2b zeigt den Beginn des Einlegens des Rückwärtsganges aus der Neutralposition heraus, wobei der Schalthebel 4 mit der Spitze 8 des Knickes der Biegefeder 1 in Berührung kommt. Im weiteren Verlauf der Bewegung des Schalthebels übt dieser gegen die Biegefeder 1 einen Druck aus, welchem die Biegefeder aufgrund ihrer Elastizität nachgibt. Der Schalthebel 4 kann somit wie in den Figuren 2c) und 2d) gezeigt in den Arm der Schaltgasse gelangen, welcher zum Rückwärtsgang "RW" führt. Durch die gegen die Biegefeder 1 aufzubringende Kraft erhält der Fahrer eine sensorische Rückkopplung, die ihm das Einlegen des Rückwärtsgangs bewusst macht. In der in Figur 2d) gezeigten Position des eingelegten Rückwärtsgangs wird der Schalthebel durch die gegen ihn anliegende Biegefeder zusätzlich in dieser Position stabilisiert.

Figur 2e zeigt das Bewegen des Schalthebels 4 vom vierten Gang "4" zum fünften Gang "5" beziehungsweise umgekehrt. Diese Schaltbewegung erfolgt unbeeinflusst durch die Biegefeder 1, da der Schalthebel mit dieser nicht in Kontakt kommt.

Figur 2f zeigt eine mögliche Situation bei der Bewegung des Schalthebels 4 aus der Position des fünften Ganges heraus. Bei einer geraden Bewegung in Richtung der Schaltgasse stößt der Schalthebel 4 dabei an den steilen Abschnitt 9 der Biegefeder 1 an, wodurch die weitere Bewegung in Richtung der Schaltgasse und damit zum Rückwärtsgang "RW" blockiert und der Schalthebel in Richtung der Neutralgasse N umgelenkt wird.

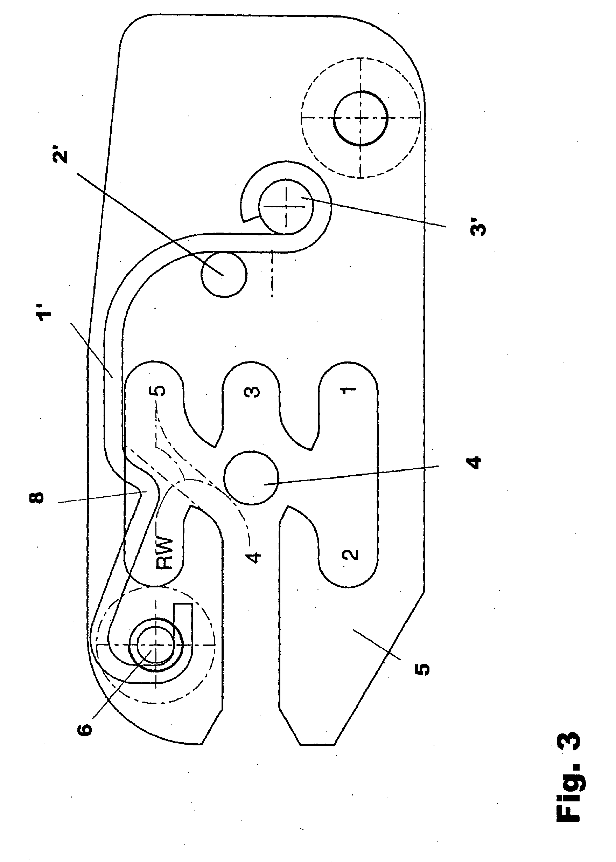

Figur 3 zeigt eine zweite Ausführungsform einer Biegefeder 1'. Teile, welche denjenigen aus Figur 1 unverändert entsprechen, sind mit denselben Bezugsziffern wie in Figur 1 versehen und werden im Folgenden nicht erneut erläutert.

Die Biegefeder 1' weist an ihren Enden einen etwas anderen Verlauf als die Biegefeder 1 aus Figur 1 auf. An ihrem in Figur 3 rechten Ende ist die Biegefeder 1' an einem von der Führungskulisse 5 senkrecht abstehenden Zapfen 3' drehbeweglich befestigt, wobei sie sich an einem weiteren von der Führungskulisse 5 abstehenden Zapfen 2' als Anschlag abstützt. An ihrem in Figur 3 linken Ende umgreift die Biegefeder 1' teilweise die Schraube 6 an der Führungskulisse 5. Durch die drei genannten Anlegepunkte 3', 2' und 6 an der Führungskulisse 5 ist die Biegefeder 1' in ihrer Position festgelegt. Die im Vergleich zu Figur 1 andersartige Wahl der Anschlag- und Befestigungspunkte führt zu einem etwas anderen Biegeverhalten der Biegefeder 1', da die fixierten Punkte in anderen Entfernungen relativ zur Knickstelle 8 liegen.

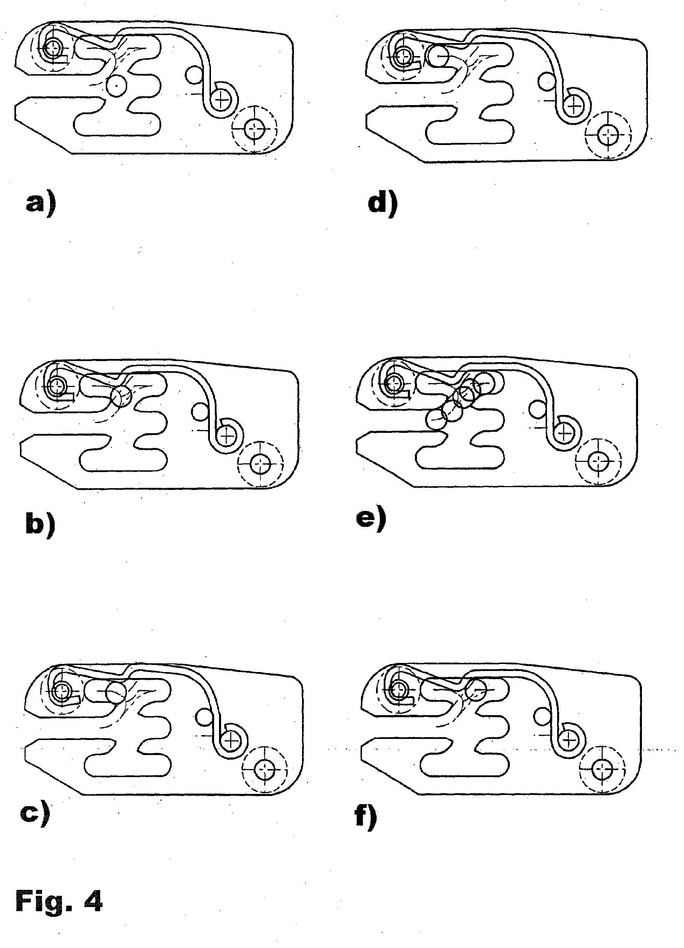

In den Figuren 4a bis 4f sind entsprechend den Figuren 2a bis 2f verschiedene Stadien von Schaltvorgängen an einer Schaltvorrichtung gemäß Figur 3 dargestellt. Da der für die Wechselwirkung mit dem Schalthebel 4 verantwortliche Knick 8 der Biegefeder 1' im Wesentlichen die gleiche Form hat wie der Knick 8 der Biegefeder 1 von Figur 1, ergibt sich ein im Wesentlichen gleichartiges Verhalten wie in Figur 2, so dass auf eine erneute Erläuterung verzichtet werden kann.

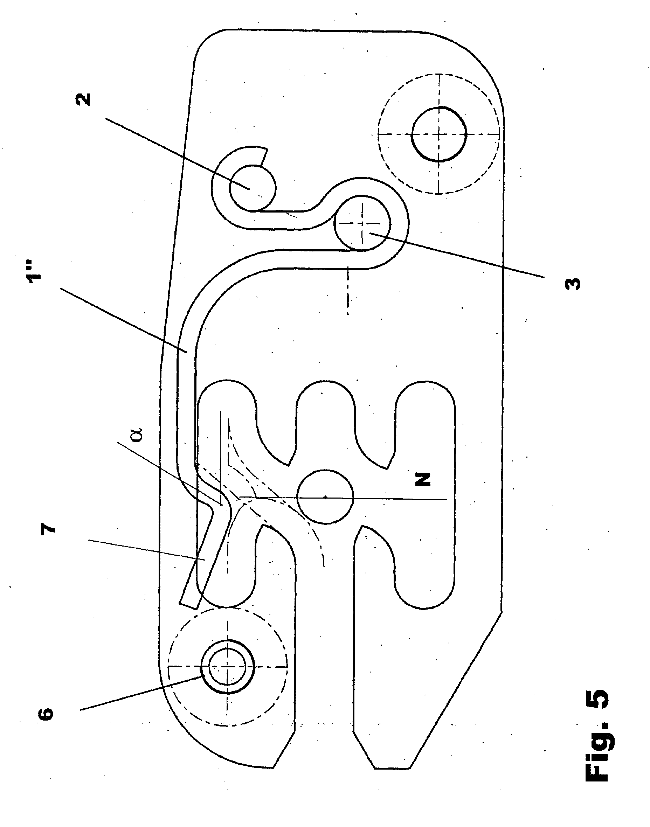

In Figur 5 ist eine dritte Ausführungsform einer Biegefeder 1'' dargestellt, wobei die im Vergleich zu den Figuren 1 und 3 gleichbleibenden Teile nicht erneut erläutert werden. Die Biegefeder 1'' ist an ihrem in Figur 5 rechten Ende in ähnlicher Weise an zwei Zapfen 2 und 3 der Führungskulisse befestigt wie die Biegefeder 1 von Figur 1. Anders als die zuletzt genannte Biegefeder 1 endet die Biegefeder 1'' jedoch hinter dem dem Rückwärtsgang zugewandten Schenkel 7 des in die Schaltgasse ragenden Knickes, ohne dass sie an diesem zweiten Ende (links in Figur 5) erneut fixiert wäre oder sich an einem Anschlag abstützen würde. Dieses Ende der Biegefeder 1" kann sich somit frei bewegen. Die Biegefeder 1'' weist dadurch eine größere Nachgiebigkeit gegenüber Kräften auf, die von dem Schalthebel 4 auf sie ausgeübt werden.

Die drei Ausführungsformen nach den Figuren 1, 3 und 5 zeigen verschiedene Möglichkeiten, das Kraftverhalten der Biegefeder in gewünschter Weise zu verändern und einzustellen. Neben den dargestellten Varianten stehen dem Fachmann selbstverständlich weitere Abwandlungen hinsichtlich der Fixierung, der Formgebung, der Dimensionierung, der Materialwahl und dergleichen zur Verfügung, um ein gewünschtes Kraftverhalten der Biegefeder unter Belastung zu erzeugen.

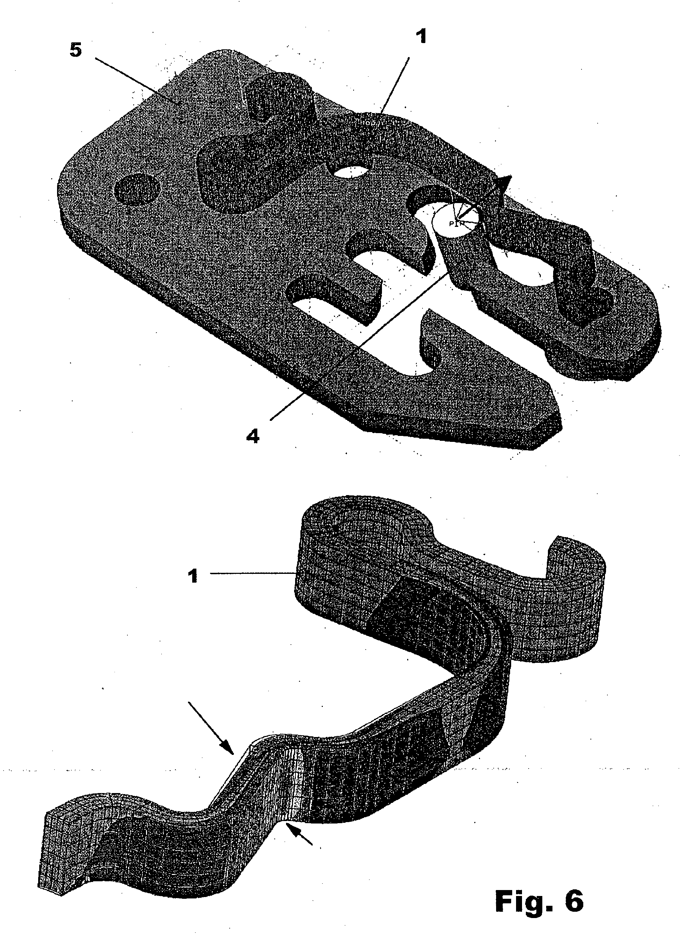

In Figur 6 ist die Schaltvorrichtung gemäß der ersten Ausführungsform von Figur 1 noch einmal perspektivisch dargestellt. Im oberen Teil der Figur 6 ist die Biegefeder 1 in ihrer betriebsbereiten Position auf der Führungskulisse 5 gezeigt. Dabei ist angedeutet, dass ein Schalthebel 4 an dem dem fünften Vorwärtsgang zugewandten Schenkel des Knickes der Biegefeder 1 anliegt. Das heißt, dass die Biegefeder ihre Funktion als Rückwärtsgangsperre ausübt.

Im unteren Teil der Figur 6 ist die Biegefeder 1 separat perspektivisch dargestellt. Die Pfeile zeigen dabei die in dieser Situation hauptsächlich kraftbelasteten Stellen der Biegefeder 1.

## Patentansprüche

1. Schaltvorrichtung für Wechselgetriebe von Kraftfahrzeugen, enthaltend
einen beweglich angeordneten Schalthebel (4);
eine Führungskulisse (5) mit einer Neutralgasse (N) und davon abzweigenden Schaltgassen ("1/2", "3/4", "5/RW") zur Führung des Schalthebels bei der Vorwahl der Schaltgasse und beim Einrücken der Gänge; und
ein gegen eine Federkraft bewegliches Sperrelement, das als Rückwärtsgangsperre in den Weg des Schalthebels hineinragt und dessen direkte Bewegung von einem Vorwärtsgang ("5") in den in derselben Schaltgasse angeordneten Rückwärtsgang ("RW") verhindert;
**dadurch gekennzeichnet, dass** das Sperrelement durch eine Biegefeder (1, 1', 1'') gebildet wird.

2. Schaltvorrichtung nach Anspruch 1,
**dadurch gekennzeichnet, dass** die Biegefeder (1, 1', 1'') an der Führungskulisse (5) befestigt ist.

3. Schaltvorrichtung nach einem der Ansprüche 1 oder 2,
**dadurch gekennzeichnet, dass** die Biegefeder (1, 1', 1") an einem Ende gegen Verschiebungen fixiert ist.

4. Schaltvorrichtung nach mindestens einem der Ansprüche 1 bis 3,
**dadurch gekennzeichnet, dass** die Biegefeder (1, 1') an einem Ende an einem Anschlag (6) abgestützt ist.

5. Schaltvorrichtung nach mindestens einem der Ansprüche 1 bis 4,
**dadurch gekennzeichnet, dass** die Biegefeder (1, 1', 1'') einen in die gemeinsame Schaltgasse ("5/RW") des Rückwärtsganges ("RW") und des Vorwärtsganges ("5") ragenden Knick (7, 8, 9) aufweist, wobei der Scheitelpunkt (8) des Knickes etwa im Bereich der Neutralgasse (N) liegt und wobei der zum genannten Vorwärtsgang ("5") gerichtete Schenkel (9) des Knickes in einem Winkel (α) schräg zur Schaltgasse ("5/RW") steht.

6. Schaltvorrichtung nach Anspruch 5,
**dadurch gekennzeichnet, dass** der Winkel (α) 40° bis 90° beträgt, vorzugsweise 50° bis 80°.

7. Schaltvorrichtung nach Anspruch 5 oder 6,
**dadurch gekennzeichnet, dass** die Schenkel (7, 9) des Knickes einen Winkel von 90° bis 120° bilden, vorzugsweise von 95° bis 110°.
